# FASCICULE DE BREVET EUROPEEN

(11) **EP 2 991 201 B1**
(45) Date de publication et mention de la délivrance du brevet: **17.02.2021**
(21) Numéro de dépôt: 15174484.4
(22) Date de dépôt: 13.06.2013
(51) Int. Cl.: H02K 5/04, E06B 9/72, E06B 9/42, E06B 9/50, H02K 5/22, H02K 11/33

(54) **DISPOSITIF MOTORISÉ DE MANOEUVRE DESTINÉ À LA MANOEUVRE D'UN ÉCRAN MOBILE À TOILE ENROULABLE D'UN DISPOSITIF DE COUVERTURE DE FENÊTRE OU D'ÉCRAN DE PROJECTION**
MOTORISIERTE BETÄTIGUNGSVORRICHTUNG ZUR BETÄTIGUNG EINES MOBILEN BILDSCHIRMS AUS EINER AUFROLLBAREN LEINWAND EINER FENSTERABDECKVORRICHTUNG ODER EINER PROJEKTIONSWAND
MOTORISED CONTROL DEVICE FOR CONTROLLING A MOBILE SCREEN WITH WINDABLE CANVAS OF A DEVICE FOR COVERING A WINDOW OR PROJECTION SCREEN

(30) Priorité: 13.06.2012 FR 1255524
(43) Date de publication de la demande: 02.03.2016
(62) Demande divisionnaire de: 13732108.9
(73) Titulaire: SOMFY ACTIVITES SA, 74300 Cluses (FR)
(72) Inventeur: LEMAITRE, Sébastien, 74300 CLUSES (FR); PEILLEX, Julien, 74300 CLUSES (FR); GEORGEAULT, Ronan, 74300 CLUSES (FR)
(74) Mandataire: Novaimo

(56) Documents cités:
- EP-A1- 1 961 910
- EP-A2- 0 911 479
- EP-A2- 1 939 390
- WO-A1-2011/150412
- DE-A1- 4 038 419
- DE-U1- 29 818 023
- FR-A1- 2 901 304
- US-A1- 2007 155 236

## Description

L'invention concerne une installation d'écran mobile à toile enroulable, de type couverture de fenêtre ou écran de projection, muni d'un élément d'enroulement motorisé. L'invention porte plus précisément sur un dispositif motorisé de manœuvre destiné à la manœuvre d'un écran mobile à toile enroulable d'un dispositif de couverture de fenêtre ou d'écran de projection et sur un dispositif de couverture de fenêtre ou d'écran de projection comprenant un tel dispositif de manœuvre. L'invention concerne notamment un système domotique motorisé de manœuvre d'un écran mobile dans une configuration de montage classique pour lequel l'arbre d'enroulement doit être maintenu en position fixe par rapport à un bâti aussi bien qu'un système domotique motorisé de manœuvre d'un écran à montage inversé, dont l'arbre d'enroulement est suspendu à la toile et donc déplaçable par rapport à sa structure porteuse (bâtiment ou structure mobile telle qu'une barre de charge ou un bras d'un store de terrasse).

Un tel écran est décrit dans la demande de brevet non publiée PCT/EP11073888 (WO2012/085252). Dans cette demande, le dispositif motorisé de manœuvre est destiné à être suspendu par la toile et comprend :
- un tube d'enroulement mobile autour d'un premier axe et sur lequel la toile est destinée à s'enrouler,
- un actionneur disposé au moins partiellement dans le tube,
- un premier moyen de fixation d'une première extrémité de la toile au tube d'enroulement.
Le poids du dispositif de manœuvre crée un couple de déroulement de la toile. Le dispositif comprend un moyen de compensation du couple de déroulement agissant exclusivement par interaction avec la pesanteur et/ou avec la toile. Ce moyen de compensation comprend notamment une barre de reprise de couple montée entre deux flasques latéraux.

Dans les différents types d'écrans, l'actionneur est monté à l'intérieur du tube d'enroulement. L'arbre de sortie de l'actionneur entraîne en rotation le tube d'enroulement lorsque le moteur de l'actionneur est alimenté.

L'actionneur comprend un carter tubulaire creux, fermé par une pièce dite tête de l'actionneur. Celle-ci est traditionnellement fixée sur un accessoire rapporté lui-même sur un bâti, un flasque ou sur une joue d'un caisson. L'arbre d'enroulement est maintenu libre en rotation sur l'actionneur, notamment sur une portion de carter tubulaire de l'actionneur.

Le document DE 40 38 419 A1 décrit un dispositif de store dans lequel un tube d'enroulement se trouve en bas du store et retenu par une toile du store.

Les documents WO 2011/150412 A1 et EP 0 911 479 A2 décrivent des dispositifs d'actionnement de stores classiques.

Le document DE29818023 décrit un dispositif de motorisation d'un tube d'enroulement d'un store.

Le document EP 1 939 390 A2 décrit un dispositif motorisé de manœuvre destiné à la manœuvre d'un store ou d'un auvent à toile enroulable. Ce dispositif motorisé comprend un actionneur pourvu d'un carter creux contenant un moteur.

Le document EP 2 901 304 A1 décrit un dispositif motorisé de manœuvre d'un élément d'occultation et/ou d'obscurcissement enroulable. Ce dispositif motorisé comprend une tête moteur destiné à être reliée à une extrémité d'un tube autour duquel vient s'enrouler l'élément d'occultation et/ou d'obscurcissement.

Le document EP 1 961 910 A1 décrit un dispositif motorisé de manœuvre d'un écran mobile à toile enroulable. Ce dispositif motorisé comprend un actionneur, pourvu d'un carter creux contenant un motoréducteur.

Le document US 2007/155236 A1 décrit un chemin de guidage d'un fil électrique défini sur une face d'un élément de support d'un dispositif électronique.

Le but de l'invention est de fournir un dispositif de manœuvre d'un écran mobile améliorant les dispositifs de manœuvre connus de l'art antérieur. En particulier, l'invention propose un dispositif de manœuvre d'architecture simple et compact, dans lequel intervient un élément de support simple, fiable, et polyvalent. Le but de l'invention est également de fournir un dispositif de manœuvre d'un écran mobile dans lequel l'actionneur s'intègre sans accessoire, le dispositif lui-même agissant comme tête d'actionneur. Par ailleurs, un autre but de l'invention est de fournir un élément de support pouvant convenir à différentes architectures de système domotique à tube ou arbre d'enroulement.

Un dispositif selon un premier aspect de l'invention est défini par la revendication 1.

Différents modes de réalisation du dispositif sont définis par les revendications dépendantes 2 à 10.

Un système selon un premier aspect de l'invention est défini par la revendication 11.

Différents modes de réalisation du système sont définis par les revendications dépendantes 12 et 13.

Selon un autre aspect de l'invention, un dispositif motorisé de manœuvre est destiné à la manœuvre d'un écran mobile à toile enroulable. Le dispositif motorisé de manœuvre comprend :
- un actionneur, comprenant un carter creux contenant un motoréducteur,
- un flasque.
Le flasque comprend un premier support s'étendant depuis le flasque suivant un premier axe longitudinal et coopérant avec le carter de l'actionneur. Le flasque comprend un second support s'étendant depuis le flasque suivant un deuxième axe distinct du premier.

Le premier support peut comprendre au moins un premier élément d'arrêt en rotation, notamment au moins une rainure, respectivement au moins une nervure, en particulier au moins un premier élément d'arrêt en rotation formé sur une partie arbrée du premier support. Le carter peut comprend au moins un deuxième élément d'arrêt en rotation, notamment au moins une nervure, respectivement au moins une rainure, en particulier au moins un deuxième élément d'arrêt en rotation formé sur des parois internes du carter. Les premier et deuxième éléments d'arrêt en rotation peuvent coopérer pour lier en rotation, notamment pour lier en rotation autour du premier axe longitudinal, le premier support et le carter.

Le flasque et ses premier et deuxième supports peuvent être réalisés de manière monobloc.

Le premier support peut être au moins partiellement inséré dans le carter creux de l'actionneur.

Le carter creux, notamment le carter creux tubulaire, de l'actionneur peut être fermé par le premier support du flasque.

Le deuxième support peut être destiné à coopérer avec un élément de compensation de couple agissant par interaction avec la toile.

Le deuxième support peut être destiné à coopérer avec un bâti suivant un axe sensiblement perpendiculaire à l'axe longitudinal du premier support.

Le flasque peut comprendre un premier alésage destiné à recevoir une partie connectique et/ou électronique de l'actionneur, le premier alésage étant réalisé à l'intérieur du premier support.

Le flasque peut comprendre un deuxième alésage sur sa face latérale externe et un opercule destiné à fermer cet alésage.

Le premier et le deuxième alésage du flasque peuvent être communicants.

Le flasque peut comprendre un trou de passage entre le deuxième alésage et sa face latérale interne, le trou débouchant à l'extérieur du diamètre du carter creux de l'actionneur pour le passage d'un câble.

Un premier chemin de guidage d'un fil électrique peut être positionné dans le deuxième alésage.

La face latérale interne du flasque peut comprendre un deuxième chemin de guidage d'un fil électrique.

Les deux supports peuvent s'étendre à partir de la face latérale interne du flasque.

Le dispositif motorisé peut comprendre une surface annulaire sur la face latérale interne du flasque contre laquelle peut venir en appui une bague palier montée libre en rotation autour du carter de l'actionneur.

Selon un autre aspect de l'invention, un système domotique motorisé comprend un dispositif motorisé tel que défini précédemment, une bague palier libre en rotation sur le carter de l'actionneur, un tube d'enroulement, monté coulissant sur la bague palier, la bague palier venant en appui sur la face interne du flasque et un deuxième flasque comprenant un élément de support du tube d'enroulement.

L'invention sera mieux comprise à la lecture de la description qui va suivre, donnée uniquement à titre d'exemple et faite en se référant aux dessins annexés sur lesquels :
La figure 1 est une représentation d'un premier mode de réalisation d'un système domotique motorisé de manœuvre d'un écran mobile dans une configuration de montage classique.
La figure 2 est une représentation d'un deuxième mode de réalisation d'un système domotique motorisé de manœuvre d'un écran mobile dans une configuration de montage inversée.
La figure 3 représente, en vue éclatée, une partie d'un dispositif motorisé de manœuvre d'un écran mobile.
La figure 4 représente, en perspective, une vue de la face externe d'un flasque.

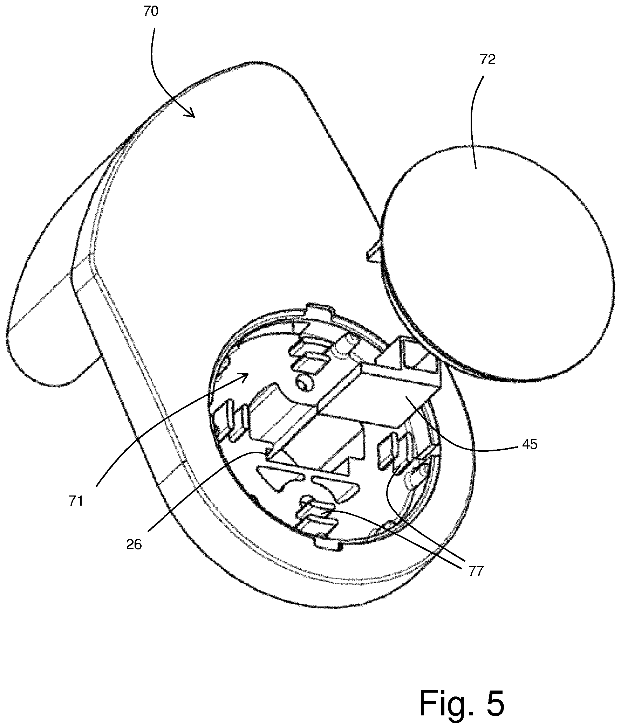

La figure 5 représente en perspective une vue de la face interne du flasque.

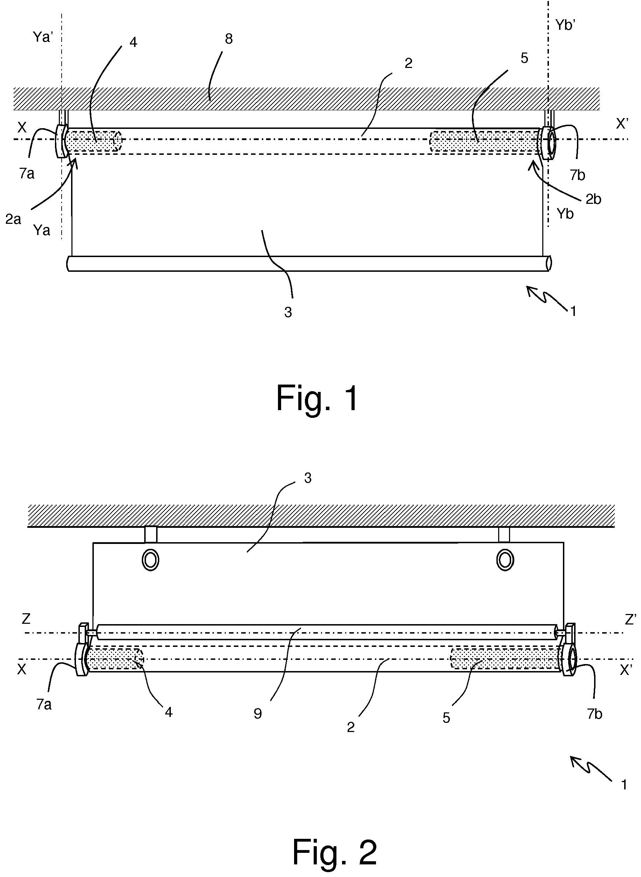

Un mode de réalisation d'un système domotique motorisé de manœuvre 1, représenté à la figure 1, permet la manœuvre motorisée d'un écran mobile 3, notamment un écran enroulable autour d'un tube d'enroulement 2, tel qu'un store. Il est notamment prévu pour être utilisé pour occulter ou restreindre la pénétration de soleil par une ouverture d'un bâtiment.

Le système domotique ou système d'écran motorisé comprend un actionneur 4 de manœuvre du tube d'enroulement. Cet actionneur est de préférence disposé partiellement ou totalement dans le tube d'enroulement. L'actionneur de manœuvre est dit autonome, c'est-à-dire qu'il est alimenté par un dispositif d'alimentation 5 propre comprenant un élément de stockage d'énergie électrique 6. L'actionneur de manœuvre est inséré dans le tube d'enroulement, à une de ses extrémités, tandis que le dispositif d'alimentation est inséré dans le tube d'enroulement, à son autre extrémité.

L'actionneur met en mouvement le tube d'enroulement de manière connue. L'écran mobile est accroché par une de ses extrémités au tube. Ainsi, la rotation du tube d'enroulement entraîne, selon son sens, l'enroulement ou le déroulement de l'écran sur le tube. L'actionneur et le tube d'enroulement s'étendent suivant un premier axe X-X'.

Le système 1 comprend deux flasques 7a, 7b de part et d'autre du tube d'enroulement. Ces flasques servent au maintien du système d'écran motorisé sur une structure ou bâti fixe 8, par exemple un plafond ou un mur. En particulier, les flasques 7a et 7b supportent le tube d'enroulement suivant deux axes Ya-Ya' et Yb-Yb', parallèles entre eux et perpendiculaires au premier axe X-X'. D'autres configurations sont également possibles. Dans ce premier mode de réalisation, le tube d'enroulement demeure fixe (hors de sa rotation autour de son axe X-X') relativement à la structure du bâtiment et la toile s'enroule autour de ce tube d'enroulement. On appelle premier flasque ou flasque moteur, le flasque 7a proche de l'actionneur et deuxième flasque, le flasque 7b à l'extrémité opposée du tube.

Dans un deuxième mode de réalisation représenté en figure 2, le système d'écran motorisé est destiné à être lié à la structure du bâtiment exclusivement par l'écran, c'est-à-dire que le système d'écran motorisé est un système suspendu par l'écran et dont le tube d'enroulement se translate, notamment se translate verticalement, au fil de l'enroulement ou du déroulement de l'écran. Ainsi, toutes les reprises d'efforts exercées sur le système sont assurées par l'écran. De préférence, aucun autre contact ou liaison entre le système et le bâtiment n'existe. Les flasques 7a et 7b servent alors à maintenir le tube d'enroulement relativement à l'écran, notamment grâce à une barre 9 de reprise de couple de rotation en contact avec l'écran et maintenue entre les flasques suivant une direction Z-Z', parallèle à l'axe X-X'. Les autres références restent inchangées.

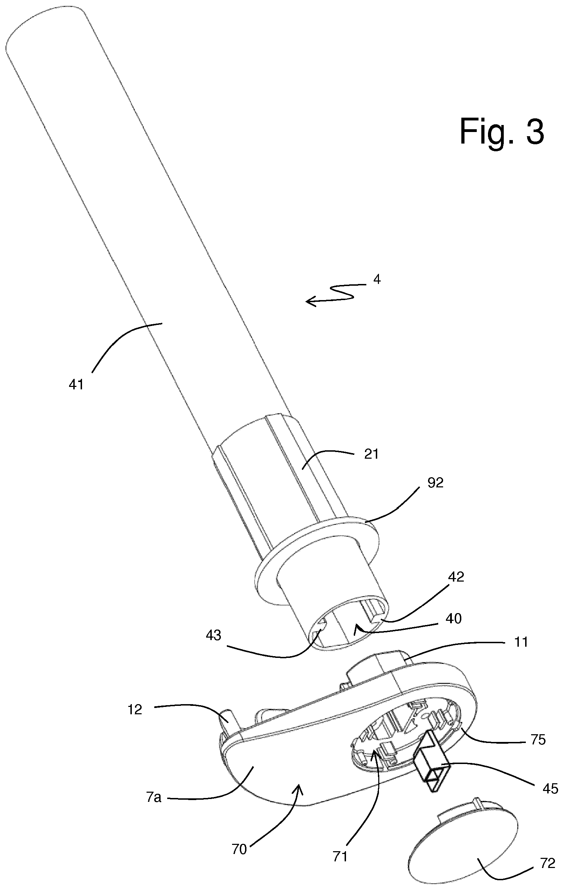

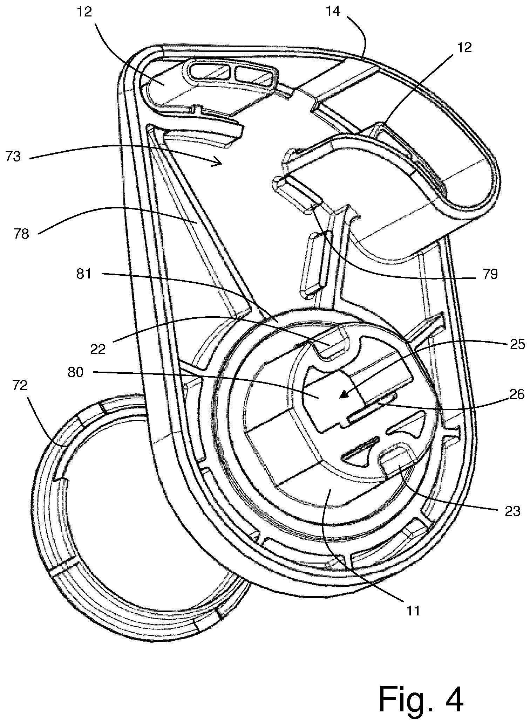

Comme représenté en figures 3 et 4, l'actionneur comprend un carter creux 41, à l'intérieur duquel sont logés les composants électromécaniques (non représentés) tels que le moteur, le réducteur, le récepteur radio, l'électronique de pilotage, etc.

La paroi interne du carter 40 présente une ou plusieurs nervures 42, 43, ainsi que des zones planes 44. Les zones planes peuvent comporter une rainure (non représentée), permettant de guider en translation au moins une partie des composants électromécanique, par exemple un circuit imprimé supportant l'électronique de pilotage.

Il est à noter que le carter tubulaire peut comprendre un opercule de fermeture (non représenté), inséré dans le carter pour protéger les composants électromécaniques de l'actionneur, et au travers duquel passent des fils d'alimentation. Cependant, même dans ce cas, l'extrémité du carter est creuse.

Une couronne 21 à collerette 92 est montée libre en rotation sur le carter. Elle sert de palier pour le tube d'enroulement lorsque l'actionneur est inséré dans le tube.

Le carter de l'actionneur est fermé par le premier flasque 7a, dont un premier support 11 coopère avec l'extrémité creuse du carter de l'actionneur. En particulier, le premier support du flasque moteur prend la forme d'un arbre de support s'étendant sensiblement perpendiculairement au flasque sur une face interne 71. L'arbre de support est muni d'au moins une gorge ou rainure longitudinale 22, 23. Les gorges coopèrent avec les nervures 42, 43 formées sur les parois internes du carter de l'actionneur. L'assemblage rainures-nervures permet à la fois de guider l'assemblage du carter sur l'arbre de support et également d'assurer la reprise des efforts en rotation liés au moteur (reprise de couple). L'arbre de support comprend également un ou plusieurs méplats 24, correspondant aux zones planes sur la surface interne du carter creux, pour ce même objectif. L'actionneur est ainsi monté sur l'arbre support par glissement, avant d'être éventuellement bloqué en translation sur l'arbre ou sur le flasque moteur. Ainsi, le premier support peut comprendre au moins un premier élément d'arrêt en rotation, notamment au moins une rainure 22, 23, respectivement au moins une nervure, en particulier au moins un premier élément d'arrêt en rotation formé sur une partie arbrée du premier support 1. Par ailleurs, en le carter 41 peut comprendre au moins un deuxième élément 42 , 43 d'arrêt en rotation, notamment au moins une nervure 42, 43, respectivement au moins une rainure, en particulier au moins un deuxième élément d'arrêt en rotation formé sur des parois internes du carter. Les premier et deuxième éléments d'arrêt en rotation coopérent avantageusement pour lier en rotation, notamment pour lier en rotation autour du premier axe longitudinal XX', le premier support et le carter.

Le flasque moteur et le carter tubulaire de l'actionneur sont donc en liaison directe, sans autre intermédiaire. En particulier, l'actionneur ne comprend pas de tête, obturant le carter et servant de point de maintien. Autrement dit, la tête de l'actionneur est constituée par le flasque qui comprend également une deuxième fonction de support, notamment une fonction de support d'un élément de compensation de couple ou une fonction de support du système domotique.

Le montage gagne ainsi en épaisseur : le flasque moteur reprend lui-même le couple de rotation fourni par l'actionneur, en étant directement connecté au carter creux 41 ou corps creux de l'actionneur. Ainsi, le tube d'enroulement et par conséquent le rebord de la toile peut être au plus proche de la face interne du flasque.

L'arbre de support est muni d'un premier alésage 25 comprenant sur ses parois internes au moins un rails 26 formant un élément de support et de guidage pour une carte électronique 45 de commande de l'actionneur. Celle-ci se retrouve ainsi au moins partiellement à l'intérieur du carter de l'actionneur lorsque celui-ci est assemblé sur l'arbre de support et lorsque la carte électronique est glissée le long des rails à l'intérieur de l'alésage de l'arbre de support.

Avantageusement, l'alésage dans l'arbre de support est traversant et le flasque moteur 7a comprend également un alésage 71 traversant, formant une ouverture sur la partie externe 70 du flasque, refermable par un couvercle 72. Cette ouverture permet d'accéder notamment à la carte électronique sans démonter le reste du système. En particulier, le flasque comprend des encoches 75, permettant notamment le passage d'un outil, comme un tournevis plat, pour agir, notamment par une action de levier, pour soulever le couvercle et accéder à la carte électronique.

La carte électronique peut également être munie d'éléments d'interface, par exemple d'un bouton de programmation, qui est ainsi accessible dès lors que le couvercle du flasque est enlevé, sans démonter le reste du système. En cas de maintenance, il est très simple de démonter le système et de désassembler les différentes parties.

Le flasque comprend également un deuxième élément de support 12. Celui-ci permet sa fixation à un mur ou un plafond, dans le premier mode de réalisation, ou à la barre 9 de reprise de couple de rotation, dans le deuxième mode de réalisation. Dans ces deux modes de réalisation, le deuxième élément de support est distinct du premier élément de support et agit suivant un axe distinct.

Dans le premier mode de réalisation, le deuxième élément de support comprend un pied qui peut être monté sur un mur ou sur un plafond, au moyen d'éléments connus tels que des vis, de la colle, des aimants. Le support (ou la suspension) du dispositif au bâti est ainsi réalisé suivant une direction Ya-Ya' perpendiculaire à l'axe du tube d'enroulement X-X'.

Sur l'exemple représenté en figure 3, le deuxième élément de support prend la forme d'un pion s'étendant suivant un axe Z-Z' parallèle à l'axe du premier support. Plusieurs pions peuvent constituer l'élément de support. La barre de reprise de couple est ainsi maintenue entre le deuxième élément de support du flasque moteur et le deuxième flasque.

L'élément de compensation de couple peut avoir une extrémité creuse dont le diamètre interne correspond à celui du pion pour y être enfiché et maintenu mécaniquement.

A la place de l'élément de reprise de couple, un élément de connexion (non représenté) peut être monté sur le deuxième élément de support sous forme de pion. Cet élément de connexion permet de monter le dispositif sur un mur ou un plafond, tout en utilisant un flasque identique ou quasi-identique pour les deux modes de réalisation. L'élément de connexion est par exemple un élément coudé.

Chaque élément latéral 7, 7' réalisé sous forme de flasque comprend outre les éléments de support mentionnés, des éléments 14 pour masquer et protéger les parties latérales de l'enroulement, et éventuellement pour guider celles-ci dans le cas où un obstacle viendrait à modifier la bonne marche de l'enroulement.

Le flasque moteur comprend en outre dans l'alésage débouchant sur sa face externe, un premier chemin de guidage 77 pour y ranger un fil d'antenne. Ce premier chemin de guidage peut prendre la forme de pions disposés en vis-à-vis et entre lesquels peut se loger par coincement une partie du câble d'antenne.

La face interne du flasque moteur est évidée et comprend, outre des parois de renforcement 78, également un deuxième chemin de guidage 79 entre le premier élément de support et le deuxième élément de support. La face interne et la face externe communiquent, au travers d'un trou de passage 80 débouchant de la face interne dans l'alésage de la face interne. Le trou de passage débouche à l'extérieur du diamètre du carter de l'actionneur. Ce deuxième chemin de guidage permet de loger un fil d'alimentation (non représenté), par exemple arrivant le long de la barre de reprise de couple depuis le dispositif d'alimentation disposé à l'autre extrémité du tube d'enroulement, vers l'actionneur, ou arrivant depuis un faux plafond le long du deuxième support. Le fil d'alimentation est alors inséré par le trou de passage vers l'alésage du flasque moteur et peut être raccordé à la carte électronique ou à l'actionneur au travers de l'alésage de l'arbre de support.

La face interne du flasque comprend également une surface annulaire 81 sur laquelle, lors du montage, vient s'appuyer la collerette de la couronne servant de palier au tube d'enroulement. L'état de surface et/ou les faibles dimensions de cette surface annulaire permettent de minimiser les frottements en cours de fonctionnement.

L'invention s'applique également dans le cadre d'un élément mobile non enroulable sur le tube, par exemple un store de type plissé ou bouillonné de type inversé, dont les cordons s'enroulent sur un arbre entraîné par l'actionneur, par exemple sur un tube contenant le dispositif d'alimentation. Elle s'applique également dans le cadre d'un écran de type battant (volet ou portail), dont le dispositif d'alimentation serait logé dans un tube d'actionnement, par exemple un tube positionné au niveau des gonds.

## Revendications

1. Dispositif motorisé (1) de manœuvre destiné à la manœuvre d'un écran mobile à toile enroulable (3), le dispositif motorisé (1) de manœuvre comprenant :
- un actionneur (4), comprenant un carter creux (41), notamment un carter creux tubulaire, contenant un moteur et un réducteur, l'actionneur (4) comprenant un récepteur radio avec un fil électrique d'antenne,
- un flasque de montage (7a), le flasque comprenant une face latérale interne (73) et une face latérale externe (70), le flasque (7a) comprenant un premier support (11) s'étendant, à partir de la face latérale interne (73) du flasque (7a), suivant un premier axe longitudinal (X-X'), le carter creux (41) de l'actionneur (4) étant fermé par le flasque (7a) dont le premier support (11) coopère avec l'extrémité creuse du carter,
**caractérisé en ce que** le flasque (7a) comprend un chemin de guidage (77) du fil électrique d'antenne dans un alésage (71) sur la face latérale externe (70) du flasque (7a) et **en ce que** le chemin de guidage (77) permet de ranger le fil d'antenne.

2. Dispositif motorisé (1) selon la revendication 1, **caractérisé en ce que** le premier support (11) comprend au moins un premier élément (22 , 23) d'arrêt en rotation, notamment au moins une rainure (22, 23), respectivement au moins une nervure, en particulier au moins un premier élément d'arrêt en rotation formé sur une partie arbrée du premier support (11) et **en ce que** le carter (41) comprend au moins un deuxième élément (42 , 43) d'arrêt en rotation, notamment au moins une nervure (42 , 43), respectivement au moins une rainure, en particulier au moins un deuxième élément d'arrêt en rotation formé sur des parois internes du carter (41), les premier et deuxième éléments d'arrêt en rotation coopérant pour lier en rotation, notamment pour lier en rotation autour du premier axe longitudinal (X-X'), le premier support (11) et le carter (41).

3. Dispositif motorisé (1) selon l'une des revendications précédentes, **caractérisé en ce que** le chemin de guidage (77) prend la forme de pions disposés en vis-à-vis et entre lesquels peut se loger par coincement une partie du fil d'antenne.

4. Dispositif motorisé (1) selon l'une des revendications précédentes, **caractérisé en ce que** le flasque (7a) comprend un opercule (72) destiné à fermer l'alésage (71) sur la face latérale externe.

5. Dispositif motorisé (1) selon l'une des revendications précédentes, **caractérisé en ce que** l'actionneur (4) comprend à l'intérieur du carter creux (41) une électronique de pilotage.

6. Dispositif motorisé (1) selon l'une des revendications précédentes, **caractérisé en ce que** le flasque (7a) comprend un alésage (25) destiné à recevoir une partie (45) connectique et/ou électronique de l'actionneur (4), ledit alésage (25) étant réalisé à l'intérieur du premier support (11).

7. Dispositif motorisé (1) selon la revendication précédente, **caractérisé en ce que** l'alésage (71) sur la face externe du flasque (7a) et l'alésage (25) réalisé à l'intérieur du premier support (11) sont communicants.

8. Dispositif motorisé (1) selon l'une des revendications 6 ou 7, **caractérisé en ce que** le flasque (7a) comprend un trou de passage entre l'alésage (25) réalisé à l'intérieur du premier support (11) et sa face latérale interne pour le passage d'un câble, notamment le passage d'un câble d'alimentation.

9. Dispositif motorisé (1) selon l'une des revendications précédentes, **caractérisé en ce qu'**il comprend une surface annulaire sur la face latérale interne du flasque (7a) contre laquelle peut venir en appui une bague palier montée libre en rotation autour du carter (41) de l'actionneur (4).

10. Dispositif motorisé (1) selon l'une des revendications précédentes, **caractérisé en ce que** le premier support (11) coopère avec le carter (41) de l'actionneur (4) et **en ce qu'**il comprend un second support (12) s'étendant depuis le flasque (7a) suivant un deuxième axe distinct du premier (Ya-Ya', Z-Z').

11. Système domotique motorisé comprenant un dispositif motorisé (1) tel que défini selon l'une des revendications précédentes, une bague palier libre en rotation sur le carter (41) de l'actionneur (4), un tube d'enroulement, monté coulissant sur la bague palier, la bague palier venant en appui sur la face interne du flasque (7a) et un deuxième flasque (7a) comprenant un élément de support du tube d'enroulement, le système comprenant un récepteur radio et un dispositif d'alimentation de l'actionneur (4) comprenant un élément de stockage d'énergie électrique.

12. Système domotique motorisé selon la revendication précédente, **caractérisé en ce que** l'actionneur (4) de manœuvre est inséré dans le tube d'enroulement, à une de ses extrémités, tandis que le dispositif d'alimentation est inséré dans le tube d'enroulement, à son autre extrémité.

13. Système domotique motorisé selon l'une des revendications 11 et 12, **caractérisé en ce que** le flasque (7a) est fixé sur un accessoire rapporté lui-même sur un bâti ou une joue d'un caisson.

## Patentansprüche

1. Motorisierte Betätigungsvorrichtung (1), die zur Betätigung eines beweglichen Schirms mit aufrollbarem Tuch (3) bestimmt ist, wobei die motorisierte Betätigungsvorrichtung (1) enthält:
- einen Stellantrieb (4), der ein Hohlgehäuse (41), insbesondere ein rohrförmiges Hohlgehäuse, aufweist, das einen Motor und ein Getriebe enthält, wobei der Stellantrieb (4) einen Funkempfänger mit einem elektrischen Antennendraht enthält,
- einen Montageflansch (7a), wobei der Flansch eine innere Seitenfläche (73) und eine äußere Seitenfläche (70) enthält, wobei der Flansch (7a) einen ersten Halter (11) enthält, der sich ausgehend von der inneren Seitenfläche (73) des Flanschs (7a) gemäß einer ersten Längsachse (X-X') erstreckt, wobei das Hohlgehäuse (41) des Stellantriebs (4) vom Flansch (7a) verschlossen wird, dessen erster Halter (11) mit dem hohlen Ende des Gehäuses zusammenwirkt,
**dadurch gekennzeichnet, dass** der Flansch (7a) einen Leitpfad (77) des elektrischen Antennendrahts in eine Bohrung (71) auf der äußeren Seitenfläche (70) des Flanschs (7a) enthält, und dass der Leitpfad (77) es ermöglicht, den Antenenndraht zu verstauen.

2. Motorisierte Vorrichtung (1) nach Anspruch 1, **dadurch gekennzeichnet, dass** der erste Halter (11) mindestens ein erstes Drehstoppelement (22, 23), insbesondere mindestens eine Rille (22, 23), bzw. mindestens eine Rippe, insbesondere mindestens ein erstes Drehstoppelement enthält, das auf einem Schaftteil des ersten Halters (11) geformt ist, und dass das Gehäuse (41) mindestens ein zweites Drehstoppelement (42, 43) enthält, insbesondere mindestens eine Rippe (42, 43) bzw. mindestens eine Rille, insbesondere mindestens ein zweites Drehstoppelement, das auf Innenwänden des Gehäuses (41) geformt ist, wobei die ersten und zweiten Drehstoppelemente zusammenwirken, um den ersten Halter (11) und das Gehäuse (41) in Drehung, insbesondere in Drehung um die erste Längsachse (X-X'), zu verbinden.

3. Motorisierte Vorrichtung (1) nach einem der vorhergehenden Ansprüche, **dadurch gekennzeichnet, dass** der Leitpfad (77) die Form von einander gegenüber angeordneten Zapfen annimmt, zwischen denen ein Teil des Antennendrahts durch Einklemmen untergebracht werden kann.

4. Motorisierte Vorrichtung (1) nach einem der vorhergehenden Ansprüche, **dadurch gekennzeichnet, dass** der Flansch (7a) eine Abdeckung (72) enthält, die dazu bestimmt ist, die Bohrung (71) an der äußeren Seitenfläche zu verschließen.

5. Motorisierte Vorrichtung (1) nach einem der vorhergehenden Ansprüche, **dadurch gekennzeichnet, dass** der Stellantrieb (4) innerhalb des Hohlgehäuses (41) eine Steuerelektronik enthält.

6. Motorisierte Vorrichtung (1) nach einem der vorhergehenden Ansprüche, **dadurch gekennzeichnet, dass** der Flansch (7a) eine Bohrung (25) enthält, die dazu bestimmt ist, einen Anschluss- und/oder Elektronikteil (45) des Stellantriebs (4) aufzunehmen, wobei die Bohrung (25) im Inneren des ersten Halters (11) hergestellt ist.

7. Motorisierte Vorrichtung (1) nach dem vorhergehenden Anspruch, **dadurch gekennzeichnet, dass** die Bohrung (71) an der Außenseite des Flanschs (7a) und die im Inneren des ersten Halters (11) hergestellte Bohrung (25) miteinander in Verbindung stehen.

8. Motorisierte Vorrichtung (1) nach einem der Ansprüche 6 oder 7, **dadurch gekennzeichnet, dass** der Flansch (7a) ein Durchgangsloch zwischen der im Inneren des ersten Halters (11) hergestellten Bohrung (25) und seiner inneren Seitenfläche für den Durchgang eines Kabels enthält, insbesondere den Durchgang eines Versorgungskabels.

9. Motorisierte Vorrichtung (1) nach einem der vorhergehenden Ansprüche, **dadurch gekennzeichnet, dass** sie eine ringförmige Fläche auf der inneren Seitenfläche des Flanschs (7a) enthält, gegen die ein Lagerring in Auflage kommen kann, der drehfrei um das Gehäuse (41) des Stellantriebs (4) montiert ist.

10. Motorisierte Vorrichtung (1) nach einem der vorhergehenden Ansprüche, **dadurch gekennzeichnet, dass** der erste Halter (11) mit dem Gehäuse (41) des Stellantriebs (4) zusammenwirkt, und dass sie einen zweiten Halter (12) enthält, der sich vom Flansch (7a) gemäß einer zweiten Achse anders als die erste (Ya-Ya', Z-Z') erstreckt.

11. Motorisiertes Haustechniksystem, das eine motorisierte Vorrichtung (1) wie nach einem der vorhergehenden Ansprüche definiert, einen drehfreien Lagerring auf dem Gehäuse (41) des Stellantriebs (4), ein Aufrollrohr, das auf dem Lagerring gleitend montiert ist, wobei der Lagerring auf der Innenseite des Flanschs (7a) aufliegt, und einen zweiten Flansch (7b) enthält, der ein Halterelement des Aufrollrohrs enthält, wobei das System einen Funkempfänger und eine Versorgungsvorrichtung des Stellantriebs (4) enthält, die ein Speicherelement elektrischer Energie enthält.

12. Motorisiertes Haustechniksystem nach dem vorhergehenden Anspruch, **dadurch gekennzeichnet, dass** der Betätigungsstellantrieb (4) in das Aufrollrohr an einem seiner Enden eingeführt wird, während die Versorgungsvorrichtung in das Aufrollrohr an seinem anderen Ende eingeführt wird.

13. Motorisiertes Haustechniksystem nach einem der Ansprüche 11 und 12, **dadurch gekennzeichnet, dass** der Flansch (7a) auf ein Zubehörteil montiert ist, das selbst auf ein Gestell oder eine Wange eines Kastens angebaut ist.

## Claims

1. Motorized manoeuvring device (1) intended to manoeuvre a moving windable fabric screen (3), the motorized manoeuvring device (1) comprising:
- an actuator (4), comprising a hollow housing (41), notably a tubular hollow housing, containing a motor and a reduction gear, the actuator (4) comprising a radio receiver with an antenna electrical wire,
- a mounting end-plate (7a), the end-plate (7a) comprising an inner lateral face (73) and an outer lateral face (70), the end-plate (7a) comprising a first support (11) extending from the inner lateral face (73) of the end-plate, along a first longitudinal axis (X-X'), the hollow housing (41) of the actuator (4) being closed by the end-plate (7a), the first support (11) of which cooperates with the hollow end of the housing,
**characterized in that** the end-plate (7a) comprises a guiding path (77) of an antenna electrical wire in a bore (71) on the outer lateral face (70) of the end-plate (7a), and **in that** the guiding path (77) allows to store the antenna wire.

2. Motorized device (1) according to Claim 1, **characterized in that** the first support (11) comprises at least one first rotation stopping element (22, 23), notably at least one groove (22, 23), respectively at least one rib, in particular at least one first rotation stopping element formed on a shafted part of the first support (11) and **in that** the housing (41) comprises at least one second rotation stopping element (42, 43), notably at least one rib (42, 43), respectively at least one groove, in particular at least one second rotation stopping element formed on the inner walls of the housing (41), the first and second rotation stopping elements cooperating to link in rotation, notably to link in rotation about the first longitudinal axis (X-X'), the first support (11) and the housing (41).

3. Motorized device (1) according to one of the preceding claims, **characterized in that** the guiding path (77) take the form of pins arranged facing one another and between which a part of the antenna wire can be housed.

4. Motorized device (1) according to one of the preceding claims, **characterized in that** the end-plate (7a) comprises a cover (72) intended to close the bore (71) on the outer lateral face.

5. Motorized device (1) according to one of the preceding claims, **characterized in that** the actuator (4) comprises, inside the hollow housing (41), a control electronics.

6. Motorized device (1) according to one of the preceding claims, **characterized in that** the end-plate (7a) comprises a bore (25) intended to receive a connection and/or electronic part (45) of the actuator (4), the bore (25) being produced inside the first support (11).

7. Motorized device according to the preceding claim, **characterized in that** the bore (71) on the outer side of the end-plate (7a) and the bore (25) produced inside the first support (11) are connected to one another.

8. Motorized device according to one of Claims 6 or 7, **characterized in that** the end-plate (7a) comprises a through hole between the through bore produced inside the first support (11) and its inner lateral face, for the entry of a cable, notably for the entry of a power cable.

9. Motorized device (1) according to one of the preceding claims, **characterized in that** it comprises an annular surface on the inner lateral face of the end-plate (7a) against which a bearing ring that is mounted to rotate freely about the housing (41) of the actuator (4) bears.

10. Motorized device (1) according to one of the preceding claims, **characterized in that** the first support (11) cooperates with the housing (41) of the actuator (4) and **in that** it comprises a second support (12) extending from the end-plate (7a) along a second axis distinct from the first (Ya-Ya', Z-Z').

11. Motorized home automation system, comprising a motorized device (1) according to one of the preceding claims, a bearing ring rotating freely on the housing (41) of the actuator (4), a winding tube, mounted to slide on the bearing ring, the bearing ring bearing on the inner face of the end-plate (7a) and a second end-plate (7b) comprising a support element for the winding tube, the system comprising a radio receiver and a power supply device of the actuator (4) comprising an electrical energy storage element.

12. Motorized home automation system according to the preceding claim, **characterized in that** the manoeuvring actuator (4) is inserted into the winding tube, at one of its ends, whereas the power supply device is inserted into the winding tube, at its other end.

13. Motorized home automation system according to one of Claims 11 and 12, **characterized in that** the end-plate (7a) is fixed onto an accessory that is itself added onto a frame or on a side of a casing.
